Europäisches Patentamt

European Patent Office

Office européen des brevets

(19)

(11) EP 0 953 821 B1

(12) **EUROPEAN PATENT SPECIFICATION**

(45) Date of publication and mention
of the grant of the patent:
**28.12.2005 Bulletin 2005/52**

(51) Int Cl.⁷: **G01B 9/02**, G02B 5/30

(21) Application number: **99303357.0**

(22) Date of filing: **29.04.1999**

(54) **Achromatic quarter wave plate for air turbulence compensating interferometer**

Achromatische Viertelwellenplatte für Interferometer mit Luftturbulenzkompensation

Lame quart d'onde achromatique pour interféromètre compensé pour la turbulence de l'air

(84) Designated Contracting States:
**GB NL SE**

(30) Priority: **30.04.1998 US 70473**

(43) Date of publication of application:
**03.11.1999 Bulletin 1999/44**

(73) Proprietor: **Agilent Technologies, Inc. (a Delaware corporation)**
**Palo Alto, CA 94303 (US)**

(72) Inventor: **Zorabedian, Paul**
**Mt. View, California 94043 (US)**

(74) Representative: **Carpmaels & Ransford**
**43 Bloomsbury Square**
**London WC1A 2RA (GB)**

(56) References cited:
**US-A- 4 961 634**     **US-A- 5 404 222**
**US-A- 5 677 768**

**Description**

FIELD OF USE

The invention relates to laser interferometers, in particular to distance measuring interferometers.

BACKGROUND

Lasers are used in measurement systems for the precise measuring associated with manufacturing processes. Precision distance measuring is critical to processes such as integrated circuit (IC) fabrication. With increased laser accuracy and precision, finer IC line widths can be used, resulting in higher circuit density for greater performance. Additionally, laser system precision increases accuracy in aligning multiple layers on ICs, resulting in higher yield. A laser system has the benefit of repeatability, that is to say, the ability to repeat a precise measurement exactly. This benefit has been extremely important to the disk drive industry. Lasers allow for higher track density for greater data storage capacity, and also provide higher yields and greater throughput. Machine tools and other precision cutting machines use laser transducers to produce more accurate parts with smoother surface finishes.

Typically in a laser measurement system, a quarter-wave plate is used to change the polarization of the measurement beam in order that the beam makes two passes at the measurement mirror. During the passes, error may be introduced by air turbulence.

Air turbulence affects the performance of distance measuring interferometers such as He-Ne lasers in applications such as IC steppers or scan lithography systems. Typical length measurement errors range between ten and thirty (10-30) nanometers over a twenty (20) centimeter path. This measurement error results in stage positioning errors which affect the achievable overlay accuracy. By using the dispersive characteristics of air, measurements of the optical path length at multiple wavelengths can provide the information required to remove the effects of air turbulence on the measured path length. The small optical path length difference at the two wavelengths is directly proportional to the integrated air density measurement path.

Air turbulence correction via two independent distance measurements (using DC interferometry) has been described by Matsumoto, et. al. (Appli. Optics, v.31 pp 4522-26, 1992) using a single frequency HeNe laser and a Nd: YAG laser. However, accuracy in this method is hampered by fringe counting error; and the requirement for and attendant expense of two lasers makes this solution prohibitively expensive.

To implement this method, the ratio of the two measurement wavelengths must be known exactly. The use of a fundamental wave and its second harmonic satisfies this requirement. What is wanted is a single laser source generating two overlapping beams at two harmonically-related wavelengths, both beams characterized with a high degree of accuracy. Further needed is air turbulence error correction. Ideally, such air turbulence error correction would be without the addition of bulk to the system or expense to the manufacture of the interferometer.

What is needed is a interferometer system that reduces error from air turbulence without significant additional bulk or cost.

US-A-5677768 describes an interferometric apparatus win which two coincident orthogonally polarized laser beams of different respective frequencies are incident on a quarter-wave plate.

US-A-5404222 describes a heterodyne laser interferometric system which comprises a doubles detection beam and an un-doubled detection which are both coupled into an optical wave retarder consisting in a quarter wavelength rhomb. Such quarter wavelength rhombs are stated to provide achromatic wave retardation.

US-A-4961634 describes a quarter-wave plate in the form of two birefringent disks, each of which has its fast axis in the plane of the disk and wherein the two respective fast axes are oriented mutually orthogonally.

BRIEF SUMMARY OF THE INVENTION

In accordance with the present invention there is provided a heterodyne laser interferometer as defined in claim 1.

BRIEF DESCRIPTION OF THE DRAWINGS

Figure 1 illustrates a conventional interferometer.

Figure 2 depicts an example of an optical retarder suitable for use in an interferometer as depicted in Fig 1.

DETAILED DESCRIPTION OF THE DRAWINGS

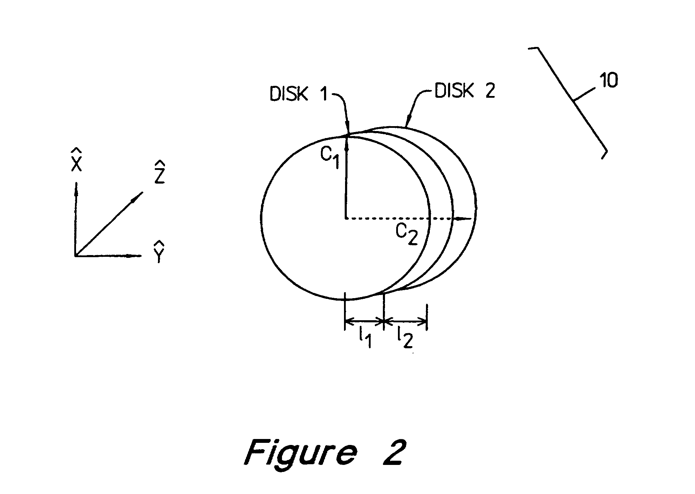

Referring to Fig 2

The retarder 10 is made by cementing or otherwise closely coupling two quartz disks. Each disk is cut so that a C axis lies in the plane of the disk. The relative orientation is made such that the two C axes are orthogonal as represented in Fig 2.

The optical retarder depicted in Fig 2 creates an interferometer system that reduces error from air turbulence in distance measurement without significant addition of bulk or manufacturing cost. The resulting inventive system provides for measurement beams at two widely separated optical frequencies, f and 2f, along the same measurement path. The inventive system further provides for an optical retarder that is a quarter-wave plate at both f and 2f. In the preferred embodiment, the optical retarder is formed by two quartz disks cut so that the C axes lie in the planes of the disks, and are oriented orthogonally relative to each other.

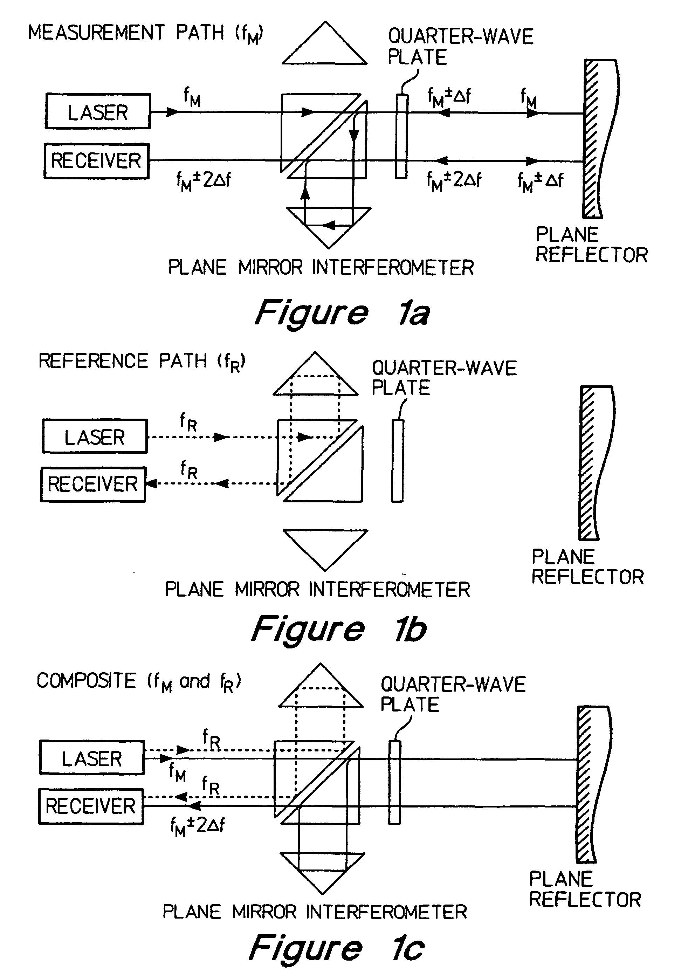

The optical retarder is positioned at a location as indicated by the wording "quarter-wave plate" in Fig 1. Normally a quarter-wave plate at wavelength lambda would be expected to function as a half-wave plate at wavelength lambda/2. This is evident when considering the fundamental characteristics of birefringence. To be effective, the air-turbulence error correction algorithm requires that the difference between the index of refraction for the frequencies is as large as possible.

It is also required that the ratio of the wavelengths be known with a high degree of accuracy. To this end, it is desirable to use the second harmonic of a wavelength, thereby ensuring that the ratio between the two wavelengths is known with a high degree of precision.

Index of refraction varies with the wavelength of the light, a well-known effect called dispersion. An interferometer system measures optical path length, which is the product of the distance and the index of refraction. By using two different wavelengths related in a precisely known ratio, with a certain minimum difference in the index of refraction, $n_1$ different than $n_2$, the two equations may be solved for two unknowns. Therefore, attention must be paid to the proper selection of the light wavelengths used, as well as the waveplate used to ensure that it functions as a quarter wave retarder for both beams. If the retardation of the waveplate differs from a quarter wave, it will introduce undesirable nonlinearity errors into the distance measurement.

The retardation of this device may be described as the difference between the phase shifts for light polarized parallel to x and y

$$\Delta\phi = \phi_x - \phi_y = [n_e l_1 + n_o l_2 - n_o l_1 - n_e l_2] \cdot \frac{2\pi}{\lambda} \qquad \text{(Eq 1)}$$

where $n_e$ and $n_o$ are, respectively, the extraordinary and the ordinary indices of refraction for the retarder material, typically quartz, and $l_1$ and $l_2$ respectively, for the thicknesses of disk 1 and disk 2.

Thus, we have

$$\Delta\phi = \Delta n \cdot \Delta l \cdot \frac{2\pi}{\lambda} \qquad \text{(Eq 2)}$$

where

$$\Delta n = n_e - n_o$$

$$\Delta l = l_1 - l_2$$

For the retarder to function as a quarter-wave plate, $\Delta\phi$ must satisfy the condition

$$\Delta\phi = M \cdot \frac{\pi}{2} \qquad \text{(Eq 3)}$$

for some odd integer M.

Further requiring that the retarder function as a quarter-wave plate at two different wavelengths $\lambda_a$ and $\lambda_b$ there must exist two odd integers $M_a$ and $M_b$ such that:

$$\Delta n(\lambda_a) \cdot \Delta l \cdot \frac{2\pi}{\lambda_a} = M_a \cdot \frac{\pi}{2} \qquad \text{(Eq 4)}$$

$$\Delta n(\lambda_b) \cdot \Delta l \cdot \frac{2\pi}{\lambda_b} = M_b \cdot \frac{\pi}{2} \qquad \text{(Eq 5)}$$

For air turbulence compensation, we are interested in wavelengths that are typically generated by diode pumped YAG lasers and for which the refractive indices of quartz are precisely known. In the preferred embodiment, the wavelengths are as follows:

| $\lambda$nm | $n_e$ | $n_o$ |
|---|---|---|
| 532 | 1.555996 | 1.546799 |
| 1064 | 1.54260 | 1.53387 |

Solving the division of [Eq. 5] by [Eq. 4], we obtain

$$\frac{M_b}{M_a} = 2 \cdot 1.0535 = 2.1070 \qquad \text{(Eq 6)}$$

Two odd integers that closely approximate a solution to equation 6 are

$$\mathbf{M_a = 9 \text{ and } M_b = 19} \qquad \left(\frac{19}{9} = 2.111\right) \qquad (Eq\ 7)$$

Since these integer values do not satisfy Eq 5 exactly, to minimize retardation error at both wavelengths, compute $\Delta l$ from Equation 4 at wavelenghts $\lambda_a$ and $\lambda_b$ and take the average

$$\Delta l_a = \frac{M_a}{\Delta n(\lambda_a)} \frac{\lambda_a}{4} = \frac{9}{.00873} \cdot \frac{1064 \ 10^{-9} m}{4} = .2742mm \qquad \text{(Eq 8)}$$

$$\Delta l_b = \frac{M_b}{\Delta n(\lambda_b)} \frac{\lambda_b}{4} = \frac{19}{.009197} \cdot \frac{532 \ 10^{-9} \ m}{4} = .2748mm \qquad \text{(Eq 9)}$$

$$\Delta l_{avg} = .2746mm \qquad \text{(Eq 10)}$$

For the He Ne interferometer, the industry-standard Hewlett-Packard interferometer system the retardation specification for the quarter-wave plate is

$$\Delta\phi \cdot \frac{\lambda}{2\pi} = \frac{\lambda}{4} \pm \frac{\lambda}{200} \qquad \text{(i.e. } 90° \pm 1.8°\text{).}$$

$$\Delta\phi_a \frac{\lambda_a}{2\pi} =$$

$$\left| 9 \cdot \frac{1064 \times 10^{-9}}{4} - .00873 \cdot .2746 \times 10^{-3} \right| = 3.258 \times 10^{-9} < \frac{\lambda a}{200} = 5.32 \times 10^{-9}$$

$$\Delta\phi_b \frac{\lambda_b}{2\pi} =$$

$$\left| 19 \cdot \frac{532 \times 10^{-9}}{4} - .009197 \cdot .2746 \times 10^{-3} \right| = 1.504 \times 10^{-9} < \frac{\lambda_b}{200} = 2.66 \times 10^{-9}$$

Thus, it can be seen that the retarder satisfies the specification at both wavelengths for the nominal disk thickness difference of 0.2746 nm.

The temperature stability of the optical retarder must also be considered. It is important that the optical retarder remains within performance specifications when accounting for thermal expansion of the retarder material, typically quartz.

Consider operation at 532 nm. The refractive index temperature coefficients are:

$$\frac{dn_e}{dT} = -0,65 \times \frac{10^{-5}}{°C}$$

and

$$\frac{dn_o}{dT} = -0.55 \times \frac{10^{-5}}{°C} \qquad \text{(at 640 nm)}$$

Therefore $\frac{d\Delta n}{dT} = -0.05 \times \frac{10^{-5}}{°C}$

Thermal expansion coefficient in the thickness direction, perpendicular to the C axis, is

$$*13.37 \times \frac{10^{-6}}{°C} = C_T$$

Letting $T_o$ be the center of the range and $T_u$ being the upper limit, $T_L$ the lower limit,

$$\Delta n(T_o)\Delta l(T_o) + \Delta l(T_o) \frac{d\Delta n}{dT} (T_u - T_o) + \Delta n(T_o) \frac{d\Delta l}{dT} (T_u - T_o) = 19 \cdot \frac{\lambda}{4} - \frac{\lambda}{200} \qquad \text{(Eq 11)}$$

$$\Delta n(T_o)\Delta l(T_o) + \Delta l(T_o) \frac{d\Delta n}{dT} (T_L - T_o) + \Delta n(T_o) \frac{d\Delta l}{dT} (T_L - T_o) = 19 \cdot \frac{\lambda}{4} - \frac{\lambda}{200} \qquad \text{(Eq 12)}$$

Subtracting Eq 12 from Eg 11 to get range:

$$\left( \Delta l(T_o) \frac{d\Delta n}{dT} + \Delta n(T_o) \frac{d\Delta l}{dT} \right)(T_u - T_L) = -\frac{\lambda}{100}$$

$$\Delta T = \frac{\lambda}{100} \frac{1}{\Delta l \frac{d\Delta n}{dT} + \Delta n \cdot \Delta l \cdot C_T} = \frac{532 \times 10^{-9}}{100} \frac{1}{.2746 \times 10^{-3} \cdot (-5 \times 10^{-7}) + (.009197) \cdot (2746 \times 10^{-6}) \cdot 13.37 \times 10^{-6}} °C$$

The temperature range computed from Eq.12 is

$$\Delta T = 25.7°C$$

The temperature coefficient of the birefringence of quartz is known to be wavelength dependent. It may be assumed for the sake of this application that the temperature range from 1064 nm retardation will be approximately equal to that for 532 nm.

ALTERNATE EMBODIMENTS

It is worth noting that the optical retarder need not be made from two disks or plates closely coupled. It is theoretically possible to use a single plate of thickness equal to $\Delta$ l. However, for the orders of $M_a$=9 and $M_b$ = 19, the single plate which would satisfy the conditions would be only 1/4 mm thick, too thin to be conveniently handled or manufactured. By choosing higher order numbers, say $M_a$=27 and $M_b$=57, we compute the thickness as follows:

$$\Delta l_{avg} = \frac{1}{2}\left\{\frac{57}{.009197} \bullet \frac{532 \times 10^{-9}}{4} + \frac{27}{.00873} \bullet \frac{1064 \times 10^{-9}}{4}\right\} = .8235\text{mm}$$

However, it is also necessary that the single disk meet the retardation specification at $\frac{\lambda}{4} + \frac{\lambda}{200}$ the preferred wavelengths. Where the wavelengths are 532 and 1064 nm, the equations yield:

$$\Delta\phi_{1064} \bullet \frac{1064 \times 10^{-9}}{2\pi} =$$

$$\left|27 \bullet \frac{1064 \times 10^{-9}}{4} - (.00873) \bullet (.8235) \times 10^{-3}\right| = 7.16 \times 10^{-9} \rangle \frac{1064 \times 10^{-9}}{200} = 5.32 \times 10^{-9}$$

$$\Delta\phi_{532} \bullet \frac{532 \times 10^{-9}}{2\pi} =$$

$$\left|57 \bullet \frac{532 \times 10^{-9}}{4} - (.009197) \bullet (.8235) \times 10^{-3}\right| = 7.27 \times 10^{-9} \rangle \frac{532 \times 10^{-9}}{200} = 2.66 \times 10^{-9}$$

Therefore, a single disk or plate retarder which is easy to handle or manufacture does not necessarily meet the specification. Conversely, one that meets the specification may be too thin to handle. These and other considerations are to be considered by the person of average skill in the art when designing an interferometric system according to the invention taught herein.

**Claims**

1. A heterodyne laser interferometric system including a pair of optical waves at a frequency f and a frequency 2f, the frequency 2f being substantially twice the frequency of the frequency f, said system comprising an optical wave retarder (10) including a pair of optical disks, each disk having a C axis in the plane of the disk, the pair of disks being closely coupled and oriented so that the C axis of one disk is orthogonal to the C axis of the other disk, wherein the thickness of each of the disks is such that the optical wave retarder is operable to retard each of the pair of waves by approximately a quarter-wave with an error in the retarding of substantially not more than 1.8 degrees.

2. A system as claimed in claim 1, wherein the difference in the thickness between the two disks included in the wave retarder (10) is preselected so that the phase shifts for the optical beams may be described:

$$\Delta\varphi = \varphi_x - \varphi_y = [n_e\, l_1 + n_o\, l_2 - n_0\, l_1 - n_e\, l_2] \cdot 2\pi / \lambda$$

where: ne is the extraordinary index of refraction; no is the ordinary index of refraction; $l_1$ is the thickness of disk 1; and $l_2$ is the thickness of disk 2.

**3.** A system as claimed in claim 2, wherein the optical retarder (10) satisfies the condition:

$$\Delta\varphi = M.\pi/2,$$

where M is some odd integer.

**4.** A system as claimed in claim 3, wherein the optical retarder (10) operates as a quarter-wave retarder on both optical waves by preselecting the ratio of the disk thicknesses to be a whole number.


**Patentansprüche**

**1.** Ein interferometrisches Heterodynlasersystem, das ein Paar von optischen Wellen bei einer Frequenz f und einer Frequenz 2f umfasst, wobei die Frequenz 2f im Wesentlichen das Doppelte der Frequenz von der Frequenz f ist, wobei das System einen Optische-Wellen-Verzögerer (10) aufweist, der ein Paar von optischen Platten umfasst, wobei jede Platte eine C-Achse in der Ebene der Platte aufweist, wobei das Paar von Platten eng gekoppelt und so ausgerichtet ist, dass die C-Achse einer Platte orthogonal zu der C-Achse der anderen Platte ist, wobei die Dicke jeder der Platten derart ist, dass der Optische-Wellen-Verzögerer wirksam ist, um jede des Paars von Wellen um etwa eine Viertelwelle zu verzögern, mit einem Fehler beim Verzögern von im Wesentlichen nicht mehr als 1,8 Grad.

**2.** Ein System gemäß Anspruch 1, bei dem die Differenz der Dicke zwischen den zwei Platten, die in dem Wellenverzögerer (10) enthalten sind, so vorausgewählt ist, dass die Phasenverschiebungen für die optischen Strahlen wie folgt beschrieben werden können:

$$\Delta\varphi = \varphi_x - \varphi_y = [n_e l_1 + n_o l_2 - n_o l_1 - n_e l_2].\ 2\pi/\lambda$$

wobei: $n_e$ der außergewöhnliche Brechungsindex ist; $n_o$ der gewöhnliche Brechungsindex ist; $l_1$ die Dicke von Platte 1 ist; und $l_2$ die Dicke von Platte 2 ist.

**3.** Ein System gemäß Anspruch 2, bei dem der optische Verzögerer (10) folgende Bedingung erfüllt:

$$\Delta\varphi = M\ .\ \pi\ /\ 2,$$

wobei M eine ungerade Ganzzahl ist.

**4.** Ein System gemäß Anspruch 3, bei dem der optische Verzögerer (10) als ein Viertelwellenverzögerer bei beiden optischen Wellen wirksam ist durch ein Vorauswählen des Verhältnisses der Plattendicken, um eine ganze Zahl zu sein.


**Revendications**

**1.** Système interférométrique à laser hétérodyne comportant une paire d'ondes optiques à une fréquence f et une fréquence 2f, la fréquence 2f étant sensiblement le double de la fréquence de la fréquence f, ledit système comprenant une lame à retard d'onde optique (10) comportant une paire de disques optiques, chaque disque présentant un axe C dans le plan du disque, la paire de disques étant étroitement couplée et orientée de sorte que l'axe C d'un disque est perpendiculaire à l'axe C de l'autre disque, dans lequel l'épaisseur de chacun des disques est telle que la lame à retard d'onde optique fonctionne pour retarder chacune de la paire d'ondes d'approximativement un quart d'onde avec une erreur dans le retardement qui n'est sensiblement pas supérieure à 1,8 degrés.

**2.** Système selon la revendication 1, dans lequel la différence d'épaisseur entre les deux disques incluse dans la lame de retard d'onde (10) est présélectionnée de sorte que les déphasages des faisceaux optiques peuvent être décrits par :

EP 0 953 821 B1

$$\Delta\varphi = \phi_x - \phi_y = [n_e l_1 + n_0 l_2 - n_0 l_1 - n_e l_2] \cdot 2\pi/\lambda$$

où : $n_e$ est l'indice de réfraction extraordinaire ; $n_0$ est l'indice de réfraction ordinaire ; $l_1$ est l'épaisseur du disque 1 ; et $l_2$ est l'épaisseur du disque 2.

3. Système selon la revendication 2, dans lequel la lame de retard optique (10) satisfait la condition :

$$\Delta\varphi = M \cdot \pi/2,$$

où M est un entier impair.

4. Système selon la revendication 3, dans lequel la lame de retard optique (10) fonctionne comme une lame de retard de quart d'onde sur les deux ondes optiques en présélectionnant le rapport des épaisseurs du disque pour qu'il soit un nombre entier.

MEASUREMENT PATH ($f_M$)

*Figure 1a*

REFERENCE PATH ($f_R$)

*Figure 1b*

COMPOSITE ($f_M$ and $f_R$)

*Figure 1c*

Figure 2